# EUROPÄISCHE PATENTSCHRIFT

(11) **EP 2 210 511 B1**
(45) Veröffentlichungstag und Bekanntmachung des Hinweises auf die Patenterteilung: **25.05.2016**
(21) Anmeldenummer: 10000666.7
(22) Anmeldetag: 22.01.2010
(51) Int. Cl.: A61D 9/00, A01K 13/00

(54) **Atmungsaktive Gamasche oder Textilie mit auf einer Trägerschicht verteilt angeordneten Strukturelementen und Herstellungsverfahren hierfür**
Breathable tendon boot or textile with structure elements distributed on a carrier layer and method for producing same
Guêtre ou textile à respiration active dotés d'éléments structurels répartis sur une couche de support et procédé de fabrication correspondant

(30) Priorität: 22.01.2009 DE 202009000852 U
(43) Veröffentlichungstag der Anmeldung: 28.07.2010
(73) Patentinhaber: RDS UG (Haftungsbeschränkt) + Co. Vertriebs KG, 91338 Igensdorf (DE)
(72) Erfinder: Schäfer, Claudia, 91338 Igensdorf (DE)
(74) Vertreter: Dreykorn-Lindner, Werner

(56) Entgegenhaltungen:
- DE-A1- 2 655 188
- GB-A- 2 051 543
- US-A1- 2008 190 381

## Beschreibung

Die Erfindung betrifft eine Gamasche oder Textilie zur Erwärmung von menschlichen oder tierischen Körperbereichen, gemäß Patentanspruch 1. Weiterhin betrifft die Erfindung, gemäß Patentanspruch 13, ein Herstellungsverfahren hierfür.

Gamaschen oder Bandagen sind seit langem bekannt. Beispielsweise ist aus der DE 66 02 307 U eine Heilbandage - insbesondere für Tiere - bekannt, wobei die Bandage die Form einer an sich bekannten verschließbaren Gamasche hat, die auf der Innenseite eine elastische, speicherfähige Schicht oder Schichten mit unregelmäßiger Oberfläche aufweiset, welche Arzneimittel aufnehmen, oder de Bandage nur durch bloßes Anliegen der Oberfläche an der Extremität halten. Um dies zu erreichen, weist die Schicht eine Vielzahl von feinen Kanälen auf, und die Oberfläche der Schicht ist unregelmäßig ausgebildet. Als Schichtwerkstoff kann zweckmäßig Schaumstoff verwendet werden, der sowohl Saugeigenschaften für die Aufnahme der Arzneimittel, als auch Rutschfestigkeit besitzt. Durch die Wahl der elastischen Schicht mit rauer Oberfläche schmiegt sich diese Schicht ohne wesentlichen Druck an jede Körperform direkt an. Lokale Einschnürungen und Kreislaufschäden werden vermieden, so dass die damit über beliebige Zeiträume anliegen kann. Die Bandage ist mit Verschlussmitteln ausgerüstet, die als Reißverschluss, Klettenverschluss, Hakenverschluss oder dgl. ausgebildet sein können.

Weiterhin ist aus der EP 0 670 704 B1 eine wärmekonservierende Bandage zum Bedecken eines menschlichen oder tierischen Gewebes bekannt. Hierzu weist die Bandage ein dem Gewebe benachbartes wärmereflektierendes Mittel zum Reflektieren von Wärme aus dem Gewebe zurück zum Gewebe, ein Mittel aus Isolationsmaterial, das das wärmereflektierende Mittel bedeckt, und ein Textilmittel, das die Rückseite des Mittels aus Isolationsmaterial bedeckt, auf. Das wärmereflektierende Mittel beinhaltet eine Schichtstruktur aus einer ersten Folie aus Kunststoffmaterial, die dem Gewebe benachbart ist, einer zweiten Folie aus Aluminium, die die erste Folie bedeckt und mit ihr verbunden ist, und ein Glasfasergewebe, das die zweite Folie bedeckt und mit ihr verbunden ist. Die erste Folie aus Kunststoffmaterial des wärmereflektierenden Mittels ist vorzugsweise aus (transparenten) Polyester hergestellt, wobei die Dicke des wärmereflektierenden Mittels vorzugsweise im Bereich von 0,3 bis 0,8 mm liegt, und insbesondere ist die Dicke gleich 0,65 mm. Das vorzugsweise eine Dicke im Bereich zwischen 2 und 16 mm aufweisende Mittel aus Isolationsmaterial mit geschlossener Zellenstruktur ist aus Neoprengummi oder Polyethylen hergestellt. Das Textilmittel ist ein strukturierter 0,1 bis 0,65 mm dicker Baumwollwebstoff, der einen hydrophilen Überzug aufweist. Um die Bandage Um einen Abschnitt des menschlichen oder tierischen Körpers herum zu sichern, sind Klettverschlussmittel an dem Textilmittel angebracht, wobei auch ein weiteres Textilmittel zwischen Gewebe und wärmereflektierende Mittel eingefügt werden kann. Das wärmereflektierende Mittel und das Textilmittel sind entlang entsprechender Kanten derselben miteinander vernäht oder verbunden, beispielsweise durch Kleben. Falls es vorhanden ist, ist das weitere Textilmittel ebenfalls mit dem wärmereflektierenden Mittel vernäht oder verbunden. Somit ist das Mittel aus Isolationsmaterial in einer Tasche zwischen dem wärmereflektierenden Mittel und dem hintersten Textilmittel aufgenommen. Schließlich kann die Bandage mit einem lichtreflektierenden Mittel versehen werden.

Weiterhin ist aus der DE 201 14377 U1 eine Pferdegamasche mit einer wärmedämmenden Einlage bekannt. Hierzu besteht die Pferdegamasche im wesentlichen aus einem um das Pferdebein herum schließbaren Mantel und einer in diesen eingesetzten Einlage. Zu seinem Verschluss weist der Mantel Verschlussmittel, beispielsweise in Gestalt von Klettbändern in Verbindung mit entsprechenden Haftfeldern aus einem Flauschmaterial, auf. Die Einlage ist mittels Klettverschlüssen in Gestalt von Klett- und Haftfeldern lösbar in den Mantel einsetzbar und besteht im wesentlichen aus einer Hülle mit Polyesterfüllung. Statt dessen kann zum gleichen Zweck auch ein Gewebe, Gewirk, Vlies oder Schaumstoff oder ein Gemisch oder eine Aufeinanderfolge solcher Materialien, kaschiert oder unkaschiert und mit oder ohne Hülle, Verwendung finden. Alternativ kann ein Gelkissen benutzt werden, welches eine verhältnismäßig hohe Wärmespeicherfähigkeit besitzt und welches vor seinem Einsatz nach Bedarf gekühlt oder auch erwärmt werden kann. Zur Verbesserung seiner Flexibilität kann es in einzelne in Umfangsrichtung des Pferdebeins aufeinander folgende Abschnitte unterteilt sein. Die Tasche kann eine Klappe aufweisen, durch die das Gelkissen in die Tasche eingeführt und darin verschlossen werden kann, wozu wiederum Klett- und Haftfelder dienen oder auch Druckknöpfe bzw. Schnallen oder dergl. Verwendung finden können. Alternativ kann das Gelkissen mittels eigener Klettfelder unmittelbar in dem Mantel fixierbar sein. Durch Aussparungen zwischen den einzelnen Abschnitten des Gelkissens kann dieses luftdurchlässig sein, ebenso wie die ansonsten für die Einlage oder auch den Mantel sowie eine Tasche Verwendung findenden Materialien durch Durchbrechungen oder Porosität luftdurchlässig sein können.

Weiterhin ist aus der EP 1 629 711 B1 eine Schutzgamasche für Tiere, insbesondere für Pferde und Ponys bekannt. Um eine Schutzgamasche zu schaffen, welche eine ausreichende Steifheit aufweist, um das Pferdebein im Wesentlichen über seine gesamten Oberfläche vor äußeren Stößen und vor Schädigungen zu schützen, welche gleichzeitig ausreichend flexibel ist, um die Beweglichkeit des Pferds nicht zu behindern und ihm eine größtmögliche natürliche Gewandtheit zu gewährleisten und welche eine ausreichende Ventilation und eine ausreichende Durchlüftung am Pferdebein gewährleistet, ist die Schutzgamasche einteilig aus Thermoplast hergestellt und weist offene Zonen und geschlossene Zonen auf. Im einzelnen stellen diese offenen Zonen und geschlossenen Zonen ein Netz aus offenen und geschlossenen Zellen oder Maschen dar, wobei sich der Anteil offener Maschen und geschlossener Maschen auf der Oberfläche der Gamasche unterscheidet und wobei die Gamasche mehr geschlossene Maschen als offene Maschen in einem oder mehreren Bereichen aufweist, die in Kontakt treten sollen mit den durch äußere Stöße oder Schädigungen hoher Verletzungsgefahr ausgesetzten Bereichen des Pferde- oder Ponybeins. Vorzugsweise ist der Thermoplast aus EPDM, TPU, TPE, Santoprene und den weichen PVC-Kunststoffen ausgewählt. Die geschlossenen oder offenen Zellen oder Maschen sind derart konzipiert, dass sie Stöße absorbieren können, wobei der Anteil geschlossener Maschen zur Ausgestaltung verstärkter Zonen hoch ist. Ferner sind die offenen Zellen oder Maschen derart konzipiert, dass sie einen optimalen Luftumlauf am Pferdebein gewährleisten und jede Erhitzung in Verbindung mit Schweißabsonderung verhindern, die letztendlich zur Verletzung des Pferds, zum Beispiel durch Sehnenentzündungen, führen kann. Die Gamasche ist ferner vorzugsweise derart konzipiert, dass beim Schließen der Gamasche eine teilweise Überdeckung ihrer Seitenteile vorzugsweise über die gesamte Höhe der Gamasche besteht. Ferner ist auch die Dicke der am Ende der Seitenteile der Gamasche befindlichen Profile geringer in Bezug auf den Rest des Maschennetzes, um eine bessere Überdeckung der Seitenteile beim Schließen der Gamasche zu erreichen.

Schließlich ist aus DE 10 2007 006 413 B3 eine Thermogamasche zur Erwärmung von Pferdebeinen, mit einer mantelartig um das Bein des Pferdes zu legenden und fixierbaren Trägerschicht bekannt. Hierzu hat die Thermogamasche einen mehrschichtigen Aufbau, mit einer äußeren Trägerschicht, mit wenigstens einer nach innen darauffolgenden metallisierten Schicht und einem inneren Feinhaarfell, wobei die Schichten miteinander verbunden sind. Die metallisierte Schicht enthält eine Pulvermischung aus mindestens zwei verschiedenen elementaren Metallen, insbesondere Kupferpartikel und Aluminiumpartikel. Dabei kann das Kupfer- und Aluminium-Pulver in einer Schicht auf der Fellrückseite, also auf der Lederseite des Feinhaarfells, flächig durchgehend aufgebracht, insbesondere auch aufkaschiert sein. Das Feinhaarfell lädt sich, wenn es am Pferdebein befestigt ist durch die Bewegungen des Pferdes elektrostatisch auf, wobei durch die auf der vom Pferdebein abgewandten Seite des Feinhaarfells aufgebrachten metallisierten oder durchgehend metallischen Schicht, welche auch zur Abschirmung der elektrostatischen Aufladung dient, die elektrostatische Aufladung nicht nach Außen, sondern nach Innen zum Pferdebein hin abfließt. Prinzipiell, jedoch mit verringertem Ergebnis kann je nach den Gegebenheiten auch eine metallisierte, insbesondere Kupfer und Aluminium enthaltende Folie statt einer Beschichtung verwendet werden. Vorzugsweise ist die Trägerschicht aus Kernleder hergestellt und das Feinhaarfell, vorzugsweise ein Schaffell oder ein Katzenfell oder ein synthetisches Fell (sofern es die Eigenschaft hat sich elektrostatisch aufladen zu können), ist mit der Trägerschicht vernäht oder verklebt. Zur Herstellung wird ein Feinhaarfell zunächst mit der Pulvermischung beschichtet und anschließend mit dem Kernleder als äußere Träger- und Schutzschicht vernäht oder gegebenenfalls verklebt. Anstelle eines Kernleders kann auch ein anderes flexibles Trägermaterial verwendet werden, so z.B. eine Trägerschicht aus Kunststoff oder Textil.

Weiterhin ist aus der GB 2 051 543 A eine steife Schutzhaube für einen Pferdekopf bekannt, wobei das Formteil auf der Außen-Seite und auf der Innenseite Erhebungen/Profile und öffnungen für die Augen und die Ohren aufweist. Die Eigensteifigkeit des Formteils wird durch Rippen auf der Außen-Seite weiter verstärkt. Ein Schlag auf die steife Schutzhaube, beispielsweise auf das Auge des Pferds, wird durch Puffer, welche das Auge des Pferds umrahmen und miteinander über Stege verbunden sind, abgefedert und weiterhin wird die Schlagwirkung durch auf der gegenüberliegenden Seite angeordnete elastische Noppen weiter gedämpft.

Weiterhin ist aus der DE 26 55 188 A1 ein Bekleidungsstück bekannt, welches zu stützenden und therapeutischen Zwecken in der Schwangerschaft oder bei Krampfadern dient. Der Stoff ist in allen Richtungen flexibel und ist auf beiden Seiten mit Rippen versehen, wobei auf einer Seite eine Latexschicht aufgebracht ist. Demzufolge ist das Bekleidungsstück derart ausgeführt, dass durch das wärmeundurchlässige Material/Latex virtuelle Räume ausgebildet werden, in welchen die Luft erwärmt und angefeuchtet wird. Der hydrotherapeutische Effekt beruht auf der Zunahme der Schweißabsonderung, da die Bahn aufgrund der Wirkung des Latex wärmeundurchlässig ist und die aufgestaute Luft fließt langsam zu den oberen und unteren Teilen, wobei sie sich erneuert, aber die inneren Teile nicht kühlt.

Schließlich ist aus der DE 26 55 188 A1 eine Pferdegamasche zum Verhindern des Wundleckens aus drei Schichten bekannt, nämlich widerstandsfähige Außenschicht, flexible klebende Zwischenschicht und aufgeklebte Innenschicht.

Der Erfindung liegt gegenüber den bekannten Bandagen zur Erwärmung von menschlichen oder tierischen Körperbereichen die Aufgabe zugrunde, diese derart weiterzuentwickeln, dass eine atmungsaktive und die Bewegungsfreiheit nicht behindernde Bedeckung und eine kostengünstige Herstellung ermöglicht wird.

Diese Aufgabe wird, gemäß Patentanspruch 1, bei einer Gamasche oder Textilie zur Erwärmung von menschlichen oder tierischen Körperbereichen gelöst

Weiterhin wird diese Aufgabe durch ein Verfahren zur Herstellung einer Gamasche oder Textilie, nach Anspruch 13, dadurch gelöst, dass zur Aufbringung der Strukturelemente die Oberfläche der Trägerschicht mindestens in Teilbereichen mit Klebstoff beschichtet ist und die Strukturelemente gegen die Oberfläche der Trägerschicht geschleudert, gespritzt oder mittels Mikropipette gedrückt werden oder dass das heiße Material der Strukturelemente in Tröpfchenform gegen die Oberfläche der Trägerschicht geschleudert, gespritzt oder mittels Mikropipette gedrückt wird.

Die erfindungsgemäße Gamasche oder Textilie ermöglicht das Verteilen der Körperwärme mittels der Strukturelemente, wobei durch das punktuelle Anliegen am Körper das Verdampfen von Körperschweiß und die lokale Luftzirkulation begünstigt werden. Weiterhin ist von Vorteil, dass dieses Basismaterial kostengünstig herstellbar und mit geringem Herstellungsaufwand zu einem mehrschichtigem Aufbau verarbeitbar ist.

Erfindungsgmäß sind, gemäß Patentanspruch 2, die Strukturelemente als Kugelkalotte ausgestaltet.

Diese Weiterbildung der Erfindung weist den Vorteil auf, dass infolge der vielfältigen Querschnittsformen eine einfache Anpassung an den jeweiligen Einsatzfall unter Berücksichtigung des Tragekomforts realisierbar ist.

In Ausgestaltung der Erfindung sind, gemäß Patentanspruch 2, die Strukturelemente im Raster zueinander angeordnet.

Diese Ausgestaltung der Erfindung weist den Vorteil auf, dass die gerichtete Luftzirkulation und lokale Verteilung der Körperwärme verbessert werden kann.

Diese Wirkung kann in Weiterbildung der Erfindung, gemäß Patentanspruch 3, durch Verringerung des Abstands der Strukturelemente zueinander auf der Trägerschicht und Ausbildung einer profilähnlichen Struktur weiter verbessert werden.

Weitere Vorteile und Einzelheiten lassen sich der nachfolgenden Beschreibung von bevorzugten Ausführungsformen der Erfindung unter Bezugnahme auf die Zeichnung entnehmen. In der Zeichnung zeigt:
- **FIG. 1**: eine erste Ausführungsform einer Gamasche gemäß der Erfindung,
- **FIG. 2**: im Detail das Basismaterial der Ausführungsform nach FIG. 1,

- **FIG.3**: eine zweite Ausführungsform mit einem zweischichtigen Aufbau gemäß der Erfindung und
- **FIG.4**: eine dritte Ausführungsform einer Textilie gemäß der Erfindung.

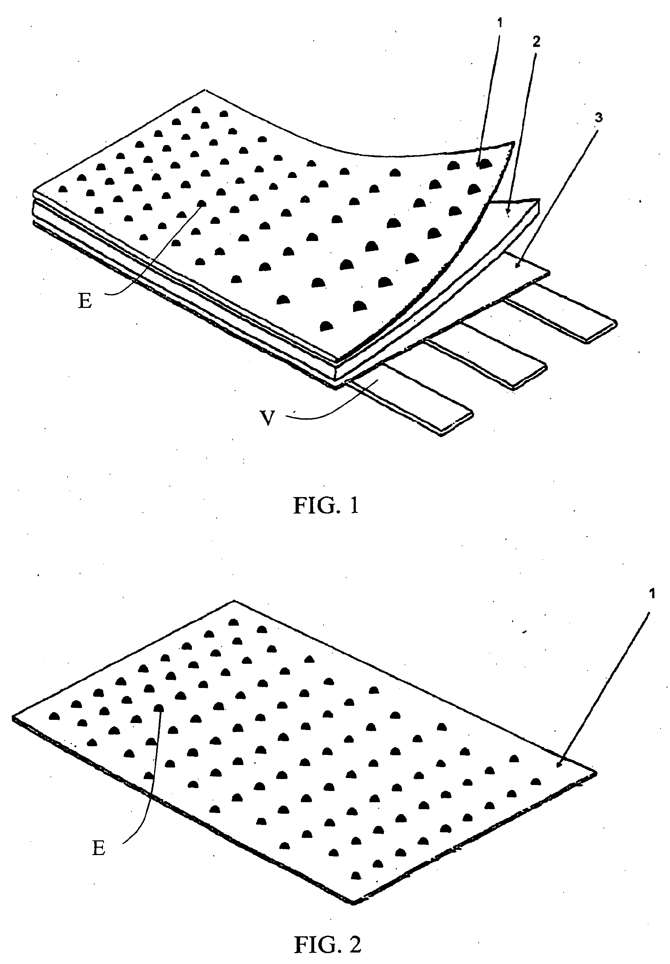

**FIG. 1** zeigt eine erste Ausführungsform gemäß der Erfindung für den Einsatzfall einer Gamasche zur Erwärmung von menschlichen oder tierischen Körperbereichen, welche dreischichtig aufgebaut ist. Erfindungsgemäß weist die Gamasche eine flexible Trägerschicht 1 aus Naturfasern oder Kunstfasern, auf der Trägerschicht 1 und in Abständen zueinander aufgebrachte oder angeformte Strukturelemente E aus wärmereflektierendem und/oder wärmeabsorbierendem Material und die Verteilung der Körperwärme über die Strukturelemente E in die Fläche der Trägerschicht 1 (im Einzelnen siehe **FIG. 2**)**.** In der Trägerschicht 1 können im Rahmen der Erfindung zur Erhöhung der vorgenannten Effekte (auch zur Erhöhung der Reißfestigkeit) Mineralien eingearbeitet sein. Weiterhin kann in der Trägerschicht 1 eine Verstärkung aus textiler Gewebestruktur oder Einfaden-Maschenware derart eingearbeitet/gewirkt werden, dass die Schweißtropfen in eine Richtung verteilt werden. Im Rahmen der Erfindung kann die Trägerschicht 1 zumindest in Teilbereichen eine Schutzschicht aus einer wasserundurchlässigen Folie und/oder Membran (siehe auch zweite Schicht 2 auf der Außenseite) aufweisen bzw. diese kann auch eingearbeitet sein.
Infrarotstrahlung liegt im elektromagnetischen Spektrum zwischen sichtbarem Licht und Mikrowellen. Sie wird in drei Kategorien aufgeteilt: nahes, mittleres und fernes Infrarot. Nahes Infrarot bezeichnet den Bereich des Infrarot-Spektrums, der dem sichtbaren Licht am nächsten liegt, fernes Infrarot liegt nahe am Frequenzbereich der Mikrowellen. Die Hauptquelle von Infrarotstrahlung ist Wärmestrahlung, die Strahlung die von Bewegungen von Atomen und Molekülen in einem Objekt produziert wird. Je höher die Temperatur ist, desto stärker bewegen sich die Atome und Moleküle und desto mehr Infrarotstrahlung produzieren sie. Menschen strahlen bei Ihrer Körpertemperatur von ca. 37°C am stärksten im Infraroten, bei einer Wellenlänge von ungefähr 10 Microns (ein Micron ist der Begriff der in der Astronomie für einen Millionstel Meter bzw. einen Mikrometer gebraucht wird). Trifft eine bestimmte IR-Strahlung auf passende Moleküle,(Trägerschicht 1 und Strukturelemente E = Ceramic-Stoff), werden diese aktiviert und die aufgenommene Strahlungsenergie zunächst in Form von Schwingungsenergie gespeichert. Dieser energiereichere Zustand wird von den Molekülen aber wieder abgebaut - durch Abstrahlen und Rückgabe der aufgenommenen Energie an den ursprünglichen Absender (= Mensch und Tier). Als Grundstoff (Trägerschicht 1) des Ceramic-Stoffs kann ein Kunstfaserstoff, wie z.B. Polyester oder Polypropylen benutzt werden. In diese Fasern werden Kombinationen aus verschiedenen Mineraloxiden (z.B. Silizium-Oxid, Quarz-Oxid, Aluminium- Oxid etc.) entweder als Pulver direkt in den Stoff 1 eingeschmolzen oder an der Oberfläche, in Form von Mineraloxid-Plättchen oder Kügelchen (Strukturelemente E) konzentriert, eingeschmolzen.

Auf der den Strukturelementen E gegenüberliegenden Seite der Trägerschicht 1 ist eine mit dieser verbundene zweite Schicht 2 angeordnet. Vorzugsweise ist mit der zweiten Schicht 2 eine dritte, Verschlussmittel V zur Befestigung am oder um den Körperbereich aufweisende Schicht 3 verbunden. Die bei dieser Ausführungsform außen liegende dritte Schicht 3 kann beispielsweise strapazierfähiges ≥ 600 Denier Ripstopmaterial sein und die zweite Schicht 2 kann beispielsweise aus Schaumstoff oder Wattierung bestehen. Zum einfachen und schnellen Anlegen der Gamasche kann die dritte Schicht 3 Klettverschlüsse V, welche sich sehr flexibel verstellen lassen, aufweisen. Im Rahmen der Erfindung können auch Befestigungsmittel in Form einer abdeckbaren Klebschicht, eines Klettenbandes, eines Steckverschlusses, von Druckknöpfen oder dgl. vorgesehen werden.

Die Strukturelemente E sind erfindungsgemäß als Kugelkalotte ausgestaltet, können im Raster zueinander angeordnet werden (siehe **FIG. 2**) und durch Verringerung des Abstands der Strukturelemente E zueinander auf der Trägerschicht 1 kann eine profilähnliche Struktur ausgebildet werden. Durch das punktuelle Anliegen der beispielsweise halbrunden Strukturelemente E (Ceramic-Balls) am Körper kann die lokale Luftzirkulation begünstigt werden. Sowohl aufgrund der verwendeten Außen- wie auch Innenmaterialien, sowie der beispielsweise halbrundförmigen Gestaltung der Ceramic-Balls und rastermäßigen Anordnung wird eine sehr hohe Atmungsaktivität erreicht.

Zur Verbindung von Strukturelement E und Trägerschicht 1 ist zwischen der Grundfläche der Strukturelemente E und der Trägerschicht 1 Klebstoff angeordnet oder die Strukturelemente E werden beim Herstellungsprozess auf der Grundfläche mit der Trägerschicht 1 verschmolzen. Zur Aufbringung kann beispielsweise das heiße Material der Strukturelemente E in Tröpfchenform gegen die Oberfläche der Trägerschicht 1 geschleudert, gespritzt oder mittels Mikropipette gedrückt werden. Alternativ können in Bereichen der Trägerschicht 1 eingebrachte Strukturelemente E ausgeformt werden. Insbesondere weisen die Strukturelemente E keramische Füllstoffe wie Silikatoxid, Aluminiunioxid oder Berylliumoxid oder Metallpulver auf. Beim erfindungsgemäßen Herstellungsvorgang können in einem zusätzliche Bearbeitungsschritt in Bereichen der Trägerschicht 1 eingebrachte Strukturelemente E ausgeformt werden oder durch Aufdrücken einer beheizten Platte werden die aufgebrachten Strukturelemente E in deren Querschnitt verformt, beispielsweise anstelle Kugelform eine abgeflachte Kugel oder eine Ellipsenform. Auch kann im Rahmen der Erfindung eine mit Silikon beschichtete Platte (um das Ankleben der Strukturelemente E zu vermeiden) benutzt werden. Dabei kann durch Temperaturwahl, Höhe des Anpressdrucks und Profilierung der Platte die Querschnittsform der Strukturelemente in weitem Rahmen verändert werden. Gleiches gilt für die Trägerschicht 1 selbst zur Ausformung der Strukturelemente (beispielsweise Ausnehmungen/Vertiefungen in der Platte), einschließlich Rippen. Ferner kann über die Höhe des Anpressdrucks auch die Verbindung zwischen Trägerschicht 1 und Strukturelemente E verbessert werden. Auch kann durch eine glänzende Oberfläche der Strukturelemente E und/oder der Trägerschicht 1 eine Erhöhung der reflektierten Wärmestrahlung erzielt werden (Lacküberzug).

In **FIG. 2** ist das erfindungsgemäße Basismaterial, bestehend aus Strukturelementen E und Trägerschicht 1 dargestellt. Erfindungsgemäß wird mittels der Strukturelemente E, welche entsprechend der Bewegung punktuell am Körper des Trägers anliegen, die Körperwärme abgesaugt und/oder in Abhängigkeit der Oberfläche (Rauhigkeit) reflektiert. Dadurch findet - ausgehend von den Strukturelementen E - eine Verteilung der Körperwärme in die Fläche statt, so dass lokale Überhitzungen unterstützt durch die Luftzirkulation (atmungsaktiv) weitgehend vermieden werden. Ein weiterer Vorteil der erfindungsgemäßen Ausgestaltung liegt darin, dass bei der Körperbewegung die Strukturelemente E einen Massageeffekt bewirken. Die Sonne ist der natürliche Lieferant von Infrarot-Wärme und auch Menschen und Tiere geben Wärme in Form von Infrarot-Stahlen nach außen ab. Die Keramikfasern des Basismaterials reflektieren diese Strahlen wieder zurück, wodurch dem Körper zusätzliche Energie zur Verfügung gestellt wird. Der Vorteil liegt daran, dass das umliegende Gewebe besser durchblutet und der Stoffwechsel angeregt wird. Die Durchlässigkeit von Zellmembranen für Wasser, Sauerstoff und Stoffwechselabbauprodukte wird erhöht. Gerade bei Pferden mit Arthrose und / oder Sehnenschäden, -verletzungen fördert eine erhöhte Durchblutung im Beinbereich den Heilungsprozess. Bei Gelenkschmerzen, Wirbelblockaden etc. verspannt sich die Muskulatur, um den Schmerz auszugleichen, die Muskeln verkrampfen sich, was eine Muskelverhärtung/Muskelverkürzung zur Folge hat. Die neuerungsgemäßen Gamaschen, welche sowohl für vorne als auch hinten einsetzbar sind, sollten eine halbe Stunde bis maximal 4 Stunden vor dem Reiten oder in der Ruhephase des Pferdes angelegt werden. Mit Hilfe dieses Materials wird die umwickelte Region (Röhrbein, Fesselgelenk und die Sehnen und Bänder in diesem Bereich) erwärmt. Durch die Wärme kann sich das Muskelgewebe entspannen und regenerieren, Schlackstoffe können abtransportiert werden und Muskelkater (Übersäuerung der Muskeln) kann vorgebeugt werden.

Vorwiegend vorgesehener Einsatzbereich ist:
- Arthrose,
- Gallen,
- Sehnen- und Bänderverletzungen,
- zum Aufwärmen vor dem Reiten - Leistungssteigerung bzw. durch entsprechendes Aufwärmen das Risiko vor Verletzungen zu minimieren.

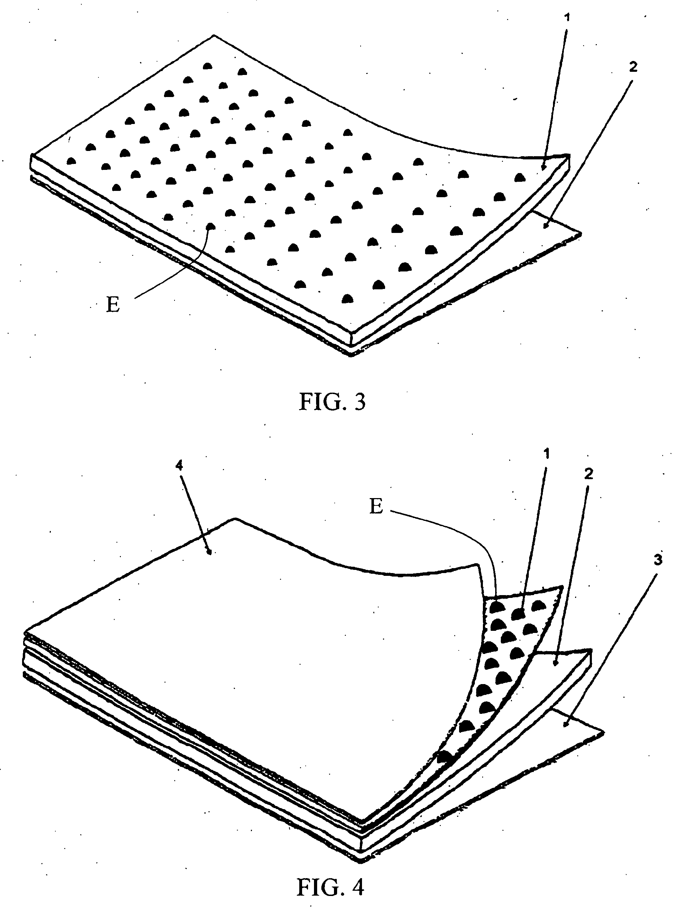

Die in **FIG. 3** dargestellte Ausgestaltung, bei der auf der den Strukturelementen E gegenüberliegenden Seite der Trägerschicht 1 eine mit dieser verbundene zweite Schicht 2 angeordnet ist, eignet sich besonders für Decken, insbesondere für Tiere wie Pferde oder Hunde (Fleecedecken, Regendecken, Stalldecken) oder für den Menschen als Kissenbezug, Bettlaken, Unterwäsche, Sohlen oder ähnlichem. In der Ausgestaltung als Rückenwärmer, insbesondere für Pferde, kann dieser mittels eines durchgehenden Klettverschlusses in eine normale Decke eingenäht werden. Er kann auch solo in der Aufwärm- oder Cool-Down-Phase eingesetzt werden. Hierfür kann zur Fixierung auf dem Pferderücken mindestens ein elastischer Deckengurt oder ein unelastischer Decken- oder Longiergurt benutz werden. Ferner kann dieser Rückenwärmer auch sehr gut zum Longieren benutzt werden. In der Ausgestaltung als Ceramic Fleecedecke-Abschwitzdecke ist, durch eine Kreuzbegurtung und feste Brustverschnallung, diese Decke besonders für folgende Einsatzzwecke geeignet:
- während Transport
- in der Box (auch unter einer normalen Regen- oder Stalldecke - rund um die Uhr).

Gleiches gilt für die Ausgestaltung als Ceramic Energy Outdoordecke-Regendecke.

Die in **FIG. 4** dargestellte Ausgestaltung, bei der über den Strukturelementen E eine vierte Schicht 4 angeordnet ist, eignet sich besonders für jegliche Art von Bekleidung, beispielsweise Pullover, T-Shirts, oder Decken, wobei das Aussehen der außen liegenden Schicht 4 dem Kleidergeschmack des Trägers angepasst werden kann. Die Verarbeitung zu Bekleidungsteilen (Jacken, Hosen, Schuhen, Handschuhen) bzw. Teilen der Bekleidung (beispielsweise im Rücken/Bandscheiben) ist einfach durchzuführen, beispielsweise durch Nähen, wobei zusätzlich die Nähte mit speziellen Schweißbändern abgedichtet werden können.

Die Schichten 2, 3, 4 bestehen vorzugsweise aus Fasern aus natürlichen oder synthetischen Polymeren oder weisen eine Mischung mit anorganischen Chemiefasern auf. Als Naturfasern kommen Pflanzenfasern, insbesondere Samenfasern, Bastfasern, Hartfasern oder Fruchtfasern, oder Fasern tierischen Ursprungs, insbesondere Wolle und feine oder grobe Tierhaare, Seiden, in Betracht. Als Chemiefasern kommen Fasern aus natürlichen Polymeren, insbesondere zellulosische Fasern, Gummifasern, oder Fasern aus synthetischen Polymeren, insbesondere Polykondensationsfasern, Polymerisationsfasern, Polyadditionsfasern, in Betracht. Bei der Mischung mit anorganischen Chemiefasern kommen je nach Anforderung Glasfasern, welche nur sehr wenig dehnbar und spröde sind (wie diese zur Verstärkung von Kunststoffen und in technischen Textilien, beispielsweise in Dekostoffen und für die Inneneinrichtung bekannt sind) oder oxidische (Aluminiumoxide, Mullite, Yttriumoxide) und nichtoxidische (SiC, SiCN, SiBCN) Keramikfasern (wie diese bei Hochtemperaturanwendungen für Dämmstoffe (bei Kurzfasern) und als Verstärkungsfasern in hochbelasteten Verbundwerkstoffen bekannt sind) in Betracht. Weiterhin kann die textile Fläche als Gewebe, Gewirke oder Gestricke (wie dies neben der Bekleidung für Polstermöbel, Vorhänge, Handtücher, Tischdecken, Zelte, Airbags, Filter, Geotextilien, Taschentücher, Windeln oder Verbandszeug verwendet werden) hergestellt werden. Die erfindungsgemäße Ausgestaltung verbessert die Produkteigenschaften, beispielsweise bei der Anwendung in Windeln oder Verbandszeug, da ein Ankleben am Körper zuverlässig verhindert wird. Werden für die Trägerschicht 1 Fasern (auch Mineralfasern) verwendet werden, welche schnell Feuchtigkeit aufnehmen können (quasi nicht quellen) und somit die Feuchtigkeit durch die Struktur und die Dünne des Materials diese nicht in die Tiefe absorbieren, sondern in die Fläche weiter transportieren können, wird eine verbesserte Verdunstung und damit Abtrocknung erzielt; bei gleichzeitiger Erhöhung des Wärmeeffekts. Dadurch entsteht eine ideale Feuchtigkeits- und Wärmeregulierung und der Tragekomfort wird weiter erhöht.

Bei der erfindungsgemäßen Gamasche oder Textilie wird eine bessere Strapazierfähigkeit mit kalkulierbarer Dehnung bei gleichzeitiger Formstabilität ermöglicht, wobei im Rahmen der Erfindung diese einschließlich der Verstärkung auch einteilig (beispielsweise L-förmig) oder auch mehrteilig ausgestaltet werden kann. Weiterhin weisen die erfindungsgemäßen Gamaschen oder Textilien den Vorteil auf, dass diese in der Waschmaschine waschbar sind. Das Herstellungsverfahren ist kostengünstig durchzuführen und umfasst - je nach Anforderung, insbesondere hinsichtlich Feuchtigkeits- und Wärmeregulierung sowie Schichtenaufbau - die vorstehend beschriebenen Verfahrensschritte.

Die Erfindung ist nicht auf die dargestellten und beschriebenen Ausführungsbeispiele beschränkt, sondern umfasst auch alle im Sinne der Erfindung gleichwirkenden Ausführungen. Ferner ist die Erfindung bislang auch noch nicht auf die im Patentanspruch 1 oder Patentanspruch 13 definierte Merkmalskombination beschränkt, sondern kann auch durch jede beliebige andere Kombination von bestimmten Merkmalen aller insgesamt offenbarten Einzelmerkmale definiert sein. Dies bedeutet, dass jedes Einzelmerkmal des Patentanspruchs 1 oder Patentanspruch 13 weggelassen bzw. durch mindestens ein an anderer Stelle der Anmeldung offenbartes Einzelmerkmal ersetzt werden kann.

## Patentansprüche

1. Gamasche oder Textile zur Erwärmung von menschlichen oder tierischen Körperbereichen, welches aufweist:
• eine flexible Trägerschicht (1) aus Naturfasern oder Kunstfasern,
• auf der Trägerschicht (1) und in Abständen zueinander aufgebrachte oder angeformte als Kugelkalotte ausgestaltete Strukturelemente (E) aus wärmereflektierendem Material mit keramischen Füllstoffen und
• dass über die Strukturelemente (E) die Körperwärme in die Fläche der Trägerschicht (1) verteilt wird, wobei durch das punktuelle Anliegen am Körper das Verdampfen von Körperschweiß und die lokale Luftzirkulation begünstigt werden.

2. Gamasche oder Textile nach Anspruch 1 **dadurch gekennzeichnet, dass** die Strukturelemente (E) im Raster zueinander angeordnet sind.

3. Gamasche oder Textile nach Anspruchh 2, **dadurch gekennzeichnet, dass** durch Verringerung des Abstands der Strukturelemente (E) zueinander auf der Trägerschicht (1) eine profilähnliche Struktur ausgebildet ist, so dass eine weitere Verbesserung der gerichteten Luftzirkulation und lokalen Verteilung der Körperwärme erzielbar ist.

4. Gamasche oder Textile nach Anspruch 1, **dadurch gekennzeichnet, dass** zwischen der Grundfläche der Strukturelemente (E) und der Trägerschicht (1) Klebstoff angeordnet ist oder die Strukturelemente (E) auf der Grundfläche mit der Trägerschicht (1) verschmolzen sind.

5. Gamasche oder Textile nach Anspruch 1, **dadurch gekennzeichnet, dass** als keramische Füllstoffe Silikatoxid, Aluminiunioxid oder Berylliumoxid oder Metallpulver benutzt werden.

6. Gamasche oder Textile nach Anspruch 1, **dadurch gekennzeichnet, dass** auf der den Strukturelementen (E) gegenüberliegenden Seite der Trägerschicht (1) eine mit dieser verbundene zweite Schicht (2) angeordnet ist.

7. Gamasche oder Textile nach Anspruch 6, **dadurch gekennzeichnet, dass** mit der zweiten Schicht (2) eine dritte, Verschlussmittel (V) zur Befestigung am oder um den Körperbereich aufweisende Schicht (3) verbunden ist.

8. Gamasche oder Textile nach Anspruch 1, **dadurch gekennzeichnet, dass** über den Strukturelementen (E) eine vierte Schicht (4) angeordnet ist.

9. Gamasche oder Textile nach einem der Ansprüche 6, 7 oder 8, **dadurch gekennzeichnet, dass** die Schichten (2, 3, 4) aus Fasern aus natürlichen oder synthetischen Polymeren bestehen oder eine Mischung mit anorganischen Chemiefasern aufweisen.

10. Gamasche oder Textile nach Anspruch 1, **dadurch gekennzeichnet, dass** zur Erhöhung der Wärmereflexion in der Trägerschicht (1) Mineralien eingearbeitet sind.

11. Gamasche oder Textile nach Anspruch 1, **dadurch gekennzeichnet, dass** in der Trägerschicht (1) eine Verstärkung aus textiler Gewebestruktur oder Einfaden-Maschenware derart eingearbeitet/gewirkt ist, dass die Schweißtropfen in eine Richtung verteilt werden.

12. Gamasche oder Textile nach Anspruch 1, **dadurch gekennzeichnet, dass** zur Erhöhung der reflektierten Wärmestrahlung die Strukturelemente (E) und/oder der Trägerschicht (1) mit einer glänzenden Oberfläche versehen sind.

13. Verfahren zur Herstellung einer Gamasche oder Textile nach Anspruch 1, **dadurch gekennzeichnet, dass** zur Aufbringung der Strukturelemente (E) die Oberfläche der Trägerschicht (1) mindestens in Teilbereichen mit Klebstoff beschichtet ist und die Strukturelemente (E) gegen die Oberfläche der Trägerschicht (1) geschleudert, gespritzt oder mittels Mikropipette gedrückt werden oder dass das heiße Material der Strukturelemente (E) in Tröpfchenform gegen die Oberfläche der Trägerschicht (1) geschleudert, gespritzt oder mittels Mikropipette gedrückt wird.

14. Verfahren nach Anspruch 13, **dadurch gekennzeichnet, dass** in Bereichen der Trägerschicht (1) eingebrachte Strukturelemente (E) ausgeformt werden oder dass durch Aufdrücken einer beheizten Platte die aufgebrachten Strukturelemente (E) in deren Querschnitt verformt werden oder zur Ausformung der Strukturelemente (E) die Trägerschicht (1) selbst verformt wird.

## Claims

1. Gaiter or textile for the heating of the human or animal body regions, comprising:
• a flexible carrier layer (1) made of natural fibers or synthetic fibers,
• on the carrier layer (1) applied or molded structural elements (E) designed as spherical calotte from heat reflective material with ceramic fillers and arranged at distances from one another and
• that by the structural elements (E) the body heat is distributed in the area of the carrier layer (1), whereby by means of spot touching the body the evaporation of perspiration and the local air circulation can be favoured.

2. Gaiter or textile according to claim 1, **characterized in that** the structural elements (E) are arranged in the grid to each other.

3. Gaiter or textile according to claim 1, **characterized in that** by reducing the spacing of the structural elements (E) from one another on the carrier layer (1) a profile-like structure is formed, such that a further improvement of the directed air flow and local distribution of the body heat can be achieved.

4. Gaiter or textile according to claim 1, **characterized in that** between the base of the structural elements (E) and the carrier layer (1) adhesive is arranged or the structural elements (E) on the base surface are fused with the support layer (1).

5. Gaiter or textile according to claim 1, **characterized in that** as ceramic fillers, silica oxides, aluminium oxide or beryllium oxide, or metal powders are used.

6. Gaiter or textile according to claim 1, **characterized in that** on the structural elements (E) opposite side of the carrier layer (1) a second layer (2) connected thereto is arranged.

7. Gaiter or textile according to claim 6, **characterized in that** a third layer (3) having closure means (V) for fastening on or wrapping the body region is connected to the second layer (2).

8. Gaiter or textile according to claim 1, **characterized in that** on the structural elements (E) a fourth layer (4) is arranged.

9. Gaiter or textile according to any one of claims 6, 7 or 8, **characterized in that** the layers (2, 3, 4) are made of fibers of natural or synthetic polymers or comprise a mixture with inorganic fibers.

10. Gaiter or textile according to claim 1, **characterized in that** minerals are incorporated in the support layer (1) for increasing the heat reflection.

11. Gaiter or textile according to claim 1, **characterized in that** a reinforcement of textile fabric structure or single-thread knitted fabric can such incorporated / castable in the support layer (1) that the sweat drops are distributed in one direction.

12. Gaiter or textile according to claim 1, **characterized in that** an increase of the reflected heat radiation can be obtained by a shiny surface of the structural elements (E) and / or the support layer (1).

13. A method for producing a gaiter or textile according to claim 1, **characterized in that** for application of the structural elements (E) the surface of the carrier layer (1) is coated at least in partial areas with adhesive and the structural elements (E) are thrown, sprayed or pressed by micropipette against the surface of the carrier layer (1) or that the hot material of the structural elements (E) are thrown, sprayed or pressed by micropipette against the surface of the support layer (1) in the form of droplets.

14. The method according to claim 13, **characterized in that in that** regions of the carrier layer (1) the applied structure elements (E) are molded or deformed in the cross-section by pressing a heated plate to the introduced structural elements (E) or the carrier layer (1) itself is deformed for molding the structural elements (E).

## Revendications

1. Soufflet ou textile pour le chauffage des parties du corps humain ou animal, comprenant:
• une couche de support souple (1) constitué de fibres naturelles ou de fibres synthétiques,
• des éléments de structure (E) d'un matériau réfléchissant de la chaleur avec remplissages céramiques appliqués ou moulés sous forme d'une calotte sphérique et étant espacés à distance les uns des autres sur la couche de support (1) et
• qui la chaleur du corps est répartir par les éléments de structure (E) dans la zone de la couche de support (1), dans lequel l'évaporation de la sueur du corps et la circulation de l'air local sont favorisés par l'adhésion sélective au corps.

2. Soufflet ou textile selon la revendication 1, **caractérisé en ce que** les éléments de structure (E) sont disposés dans la grille à l'autre.

3. Soufflet ou textile selon la revendication 2, **caractérisé en ce qu'**en diminuant l'espacement des éléments de structure (E) de l'autre sur la couche de support (1) une structure de profilé est formée et **en ce que** le flux d'air dirigé et de la distribution locale de la chaleur du corps peut être améliorée poursuite.

4. Soufflet ou textile selon la revendication 1, **caractérisé en ce qu'**entre la base des éléments de structure (E) et la couche de support (1) est disposée un adhésif, ou les éléments structurels (E) sur la surface de base sont fusionnées avec la couche de support (1).

5. Soufflet ou textile selon la revendication 1, **caractérisé en ce que** comme des charges céramiques, de l'oxyde de silicate, alumine ou de l'oxyde de béryllium, ou des poudres métalliques peuvent être utilisés.

6. Soufflet ou textile selon la revendication 1, **caractérisé en ce que** sur les éléments de structure (E) du côté opposé de la couche de support (1) une seconde couche (2) est disposée qui lui est reliée.

7. Soufflet ou textile selon la revendication 1, **caractérisé en ce que** pour la fixation sur ou contenant de la région de corps, avec la seconde couche (2) un troisième couche (3) comprenant des moyens de fermeture (V) est connectée.

8. Soufflet ou textile selon la revendication 1, **caractérisé en ce qu'**une quatrième couche (4) est disposée sur les éléments de structure (E).

9. Soufflet ou textile selon l'une quelconque des revendications 6, 7 ou 8, **caractérisé en ce que** les couches (2, 3, 4) sont constitués de fibres de polymères naturels ou synthétiques ou comprennent un mélange de fibres inorganiques.

10. Soufflet ou textile selon la revendication 1, **caractérisé en ce que** pour augmentation la réflexion de la chaleur dans la couche de support (1) des minéraux sont incorporés.

11. Soufflet ou textile selon la revendication 1, **caractérisé en ce qu'**un renforcement de la structure de tissu textile ou d'un seul fil de tissu à mailles sont incorporé / tissé dans la couche de support (1) que les gouttes d'entraînement sont distribuées dans une direction.

12. Soufflet ou textile selon la revendication 1, **caractérisé en ce que** par une surface brillante des éléments de structure (E) et / ou la couche de support (1), une augmentation du rayonnement thermique réfléchi est obtenue.

13. Procédé de fabrication d'un soufflet ou textile selon la revendication 1, **caractérisé en ce que** pour l'application des éléments de structure (E), la surface de la couche de support (1) est recouvert au moins dans des zones partielles avec l'adhésif et les éléments de structure (E) sont jeté, pulvérisé ou pressé par micropipette contre la surface de la couche de support (1), ou que le matériau chaud des éléments de structure (e) sous la forme de gouttelettes est jeté, pulvérisé ou pressé par micropipette contre la surface de la couche de support (1).

14. Procédé selon la revendication 12, **caractérisé en ce que** dans les régions de la couche de support (1) les éléments de structure (E) sont appliqués ou sont déformés par pression sur une plaque chauffante **en ce que** les régions de la couche de support (1) introduit des éléments de structure (E) sont moulés ou pour former des éléments de structure (E) la couche de support (1) lui-même est déformé.
